# EUROPEAN PATENT APPLICATION

(11) **EP 0 882 501 A1**
(43) Date of publication of application: **09.12.1998**
(21) Application number: 96942240.1
(22) Date of filing: 19.12.1996
(51) Int. Cl.: B01J 19/30

(54) **A FLEXIBLE MINI-RING IN THE PLUM FLOWER SHAPE**

(30) Priority: 22.12.1995 CN 95117866
(71) Applicant: Tsinghua University, Beijing 100084 (CN)
(72) Inventor: FEI, Weiyang, Beijing 100084 (CN); WEN, Xiaoming, Beijing 100084 (CN)
(74) Representative: Jackson, Peter Arthur
(86) International application number: PCT/CN96/00111
(87) International publication number: WO 97/23286

(57) **Abstract**

The invention relates to a chemical separation equipment, and specially to a packing. The packing according to the invention is a flexible mini-ring in the plum flower shape which has rectangular windows and inner arc strips connected to their shorter ledges. Each of said inner arc strips has a smaller rectangular window jointed with a flap bent towards the center of the mini-ring. The packing has outstanding advantages such as the excellent mass transfer performance, large capacity, low pressure drop, and low cost, etc. Therefore, the invention can used in normal or high pressure distillation, absorption, stripping and solvent extraction.

## Description

### Field of the Art

The present invention is related to a flexible plum blossom flat ring packing, which belongs to the field of separation equipment of chemical engineering.

### Background Art

Packed columns are important mass transfer equipment of chemical engineering and have been used for separation processes such as distillation, absorption and extraction, etc. in the fields of chemical industry, petroleum, light industry, pharmaceuticals and environmental protection, etc.

The structure and performance of packing have a determining impact on the technical and economic indices of packing column. Moreover, packing is a widely used and enormously manufactured product and has significant economic and social benefits. Therefore, thorough research on the structure and performance of packing has been carried out and a variety of packing has been developed in many countries. Packing can be divided into two large categories of particle packing and regular packing. Generally speaking, particle packing is suitable for operation under a normal or a high pressure, while regular packing is more suitable for operation under vacuum. Particle packing is easier to manufacture and install and costs less and therefore has found very wide applications. The present invention belongs to the category of particle packing.

There are many kinds of particle packing such as Raschig Ring, Pall Ring, cascade ring, Intalox Saddle, etc. Because of its high voidage and the ease of being manufactured into desired shapes, particle packing made from metals has become an important developing tendency. Ring packing with a low ratio of height to diameter such as the cascade ring packing and inner arc strip flat ring packing possesses more specific characteristics.

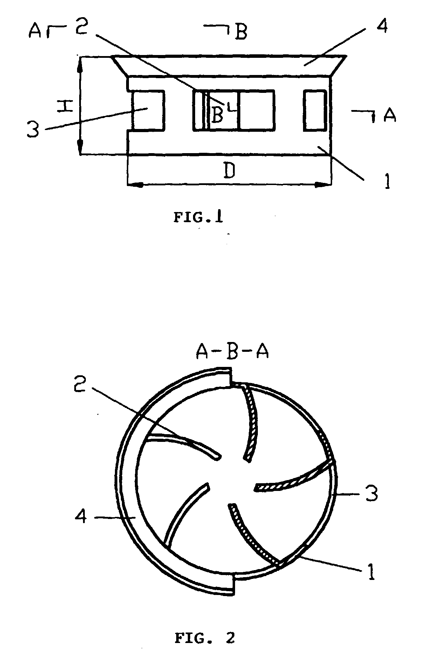

The structure of cascade ring packing is shown in Figure 1 (front view) and Figure 2 (A-B-A semi cross section view of Figure 1). In the figures, numeral 1 is the metal sheet constituting the packing; numeral 2 is the tongue; numeral 3 is the opening on the ring wall; numeral 4 is the cone folded edge on one side. The height to diameter ratio of the packing is 0.5. Because the height to diameter ratio of cascade ring packing is only one half of that of Pall Ring, its gravity center is lower and thereby the regularity of the arrangement in the column after random piling is increased and the inner surface can be utilized more thoroughly. Therefore, the pressure drop decreases when the continuous phase passes through the packing layer and the mass transfer efficiency is enhanced. However, the height to diameter ratio of such packing is still high and the structure of the inner tongue is not ideal, so there is still much room for improvement. Furthermore, its rigid structure requires a greater thickness and therefore more sheet material is consumed.

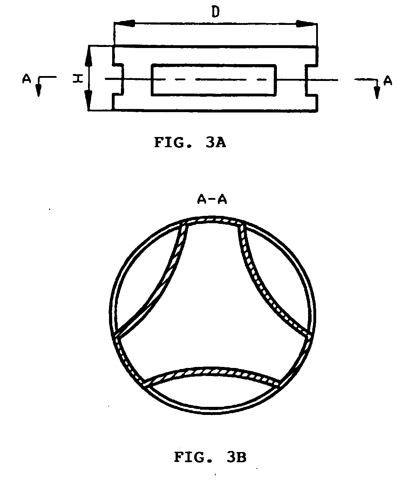

Inner arc strip flat ring packing was mainly developed by the inventors of this patent application and granted patent right by the Chinese Patent Office, i.e. Chinese Patent for utility model ZL 89220935.6 and Chinese Patent for invention ZL 89109152.1. Figure 3a is its front view and Figure 3b is its it top view. It can be seen from the figures that this packing has the following characteristics:
1. The special structure of an inner arc strip both facilitates the rationality of inner flow paths and increases the strength of the packing. Moreover the possible aggregation of liquid drops and coking can be avoided.
2. The extra low height to diameter ratio of 0.2-0.4 makes it possible for the packing to be arranged more orderly even when it is piled up random. Therefore, the pressure drop is lowered and thereby the non-ideal flow of the two phases is effectively suppressed and the capacity and mass transfer efficiency of the packing are further increased.
3. Manufacture with ease and from various materials in order to suit different demands of production.

Though this new packing has excellent performances, there is still room for improvement For example, the structure of the ring shape of the packing limits the specific area; although the inner arc strips divide the inner of the packing into four parts, the inner can be further divided; moreover, the rigid structure of the packing requires thick sheets and consumes more metal material.

### Disclosure of the Invention

The objects of this invention are to further increase the specific surface area of the packing and its mass transfer efficiency and to decrease the consumption of material based on the inner arc strip packing according to the inventor' early invention

Now summary of the invention will be provided. This invention is related to a flexible plum blossom flat ring packing which consists of a flat ring having rectangular windows and inner arc strips connected to the two short sides of the windows, characterized in that the flat ring is in plum blossom shape. In the configuration of the plum blossom, there is a pair of adjacent but parted petals with a small gap between their folded ends. Each plum petal has a said rectangular window in its middle along the longitudinal direction of the circle wall. Each inner arc strip connected to the two short sides of the rectangular window has a small rectangular window in its middle. To one end of the small rectangular window is regularly connected a tongue pointing to the center of the flat ring and dividing the internal region of the packing uniformly. The height to diameter ratio (H/D) of the packing is 0.2-0.3. The said plum blossom preferably has 4 to 7 petals.

### Brief Description of the Drawings

Figure 1 is the structural view of the cascade ring packing (front view) in the prior art.

Figure 2 is the structural view of the cascade ring packing (A-B-A semi cross section of Figure 1) in the prior art.

Figure 3a is the front view of the inner arc strip flat ring packing.

Figure 3b is the top view of the inner arc strip flat ring packing.

Figure 4 is the front view and the top view of a 5 petal flexible plum blossom flat ring packing of the present invention.

Figure 5 is the spread view of the packing of the present invention.
1-the metal flat ring of the packing
2-the rectangular window
3-the inner arc strip
4-the tongue
5-the folded edge

### Preferable Embodiment of the Present Invention

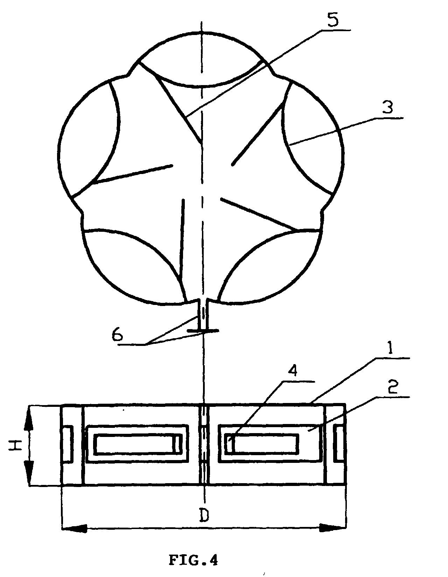

Now a detailed description will be given referring to the drawings. Figure 4 is the front view and the top view of the 5 petal flexible plum blossom flat ring packing, wherein numeral 1 is the metal flat ring forming the packing; numeral 2 is the rectangular window formed on the circular wall; numeral 3 is the inner arc strip connected to the two short sides of the rectangular window; numeral 4 is the small window formed on the arc strip; numeral 5 is the tongue connected to one end of the small window and pointing to the center of the flat ring. The two folded edges of one pair of adjacent but parted petals 6 from the flexible structure with a gap, which can prevent the packing from deformation. Five inner arc strips and five small tongues pointing to the center of the packing divide the internal of the flat plum blossom ring into ten small zones. When the fluids of two phases pass through the packing countercurrently, the five inner arc strips and the five small tongues effectively promote the cycle of dispersion-aggregation-redispersion of groups of liquid drop and promote the renewal of the mass transfer surface. This delicate internal structure can also better cut the fluid of the continuous phase and suppress the non-ideal flow. The circumference of the plum blossom of the packing is over 10% longer than that of the traditional circular packing. Therefore, the specific area in unit volume is larger than that of the inner arc strip flat ring packing and much larger than that of the Cascade Ring Packing, Pall Ring Packing, etc. when their diameters are the same.

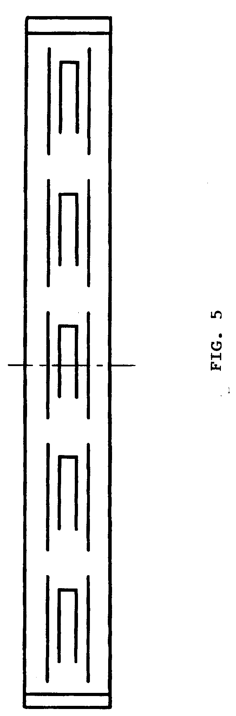

Figure 5 is the spread view of the packing of the present invention. Using the metal sheet with given length and width shown in this figure, the flexible plum blossom flat ring may be manufactured via cutting the opening, punching into the arc strip and tongue and bending into ring shape. By means of a composite mould, the aforesaid several processes can be completed in one process and therefore a large- scale production of this new packing can be realized.

This packing was manufactured from thin sheets by punching. Because of the function of the inner arc strip, the petals still have high strength and the whole packing has certain flexibility. Furthermore, the pair of the folded edges 6 may suppress the deformation of the packing and meet the needs of the engineering application.

The height to diameter ratio of such packing (H/G) is 0.2 to 0.3. This extra low height to diameter ratio can ensure the characteristics of more orderly arrangement of the packing even when it is piled up at random. It is difficult for the packing to stand on its side and therefore the cross section of the flexible plum blossom flat ring packing maintains small angles with respect to the horizontal plane. Thus, the pressure drop is low and the axial mixing is little when the fluids of two phases pass through the packing countercurrently,. This facilitates a further increase in the capacity and the mass transfer efficiency of the packing.

The present invention has achieved the anticipated effect. As expected by the invention concept, the plum blossom shape increases the specific area of the packing, the inner arc strip and the small tongue pointing to the center of the packing enhance the surface renewal and suppress the non-ideal flow of the two phases, the extra low height to diameter ratio (0.2 to 0.3) makes the packing arranged more orderly even when it is piled up at random, the flexible structure makes it possible to use thinner metal sheet for manufacturing the packing and thus further reduce the weight of the packing layer and lower its cost. Therefore, the packing of the present invention has not only the special advantages of high mass transfer efficiency, large capacity and low pressure drop, etc, but also the advantages of light weight and low cost.

The comparative result on the mass transfer performance of the ⌀25 mm flexible plum blossom flat ring packing and the ⌀25 mm inner arc strip flat ring packing is shown in Table 1. The test was carried out in an extraction packing column of 100 mm in diameter under the same operational conditions with a 50% TBP (kerosene)-acetic acid-water system having a middle range interfacial tension. The flow rates of both the aqueous and the oil phases are in L/h. Noxp is the number of mass transfer unit in 1 m height packing bed. The greater the Noxp, the higher the mass transfer efficiency of the packing. It is clear from the data in the table that the mass transfer efficiency of the packing of this invention is about 21% higher than that of the inner arc strip flat ring packing on an average. Considering that the mass transfer efficiency of the inner arc strip flat ring is appreciably higher than that of Pall Ring, Intalox Saddle and Mellapak Regular Packing (Fei, W., et al., 1993, Proceeding of ISEC-93, Vol. 1, P.49, York U.K.), the mass transfer performance of the packing of the present invention is excellent.

**Table I**

| Comparison of mass transfer efficiency of two kinds of packing | | | | | |
|---|---|---|---|---|---|
| Run No. | Flow rate of aqueous phase | Flow rate of oil phase | Noxp* Packing 1 | Noxp* Packing 2 | ΔN/Noxp (%) |
| 1 | 76.8 | 68 | 0.911 | 0.726 | 23.6 |
| 2 | 76.8 | 85 | 0.872 | 0.830 | 4.8 |
| 3 | 76.8 | 102 | 1.51 | 1.51 | 23.8 |
| 4 | 76.8 | 119 | 1.90 | 1.34 | 29.5 |
| 5 | 76.8 | 136 | 2.02 | 1.54 | 23.7 |

| | | | | | |
|---|---|---|---|---|---|
| * Packing 1 is the flexible plum blossom flat ring packing, packing 2 is the inner arc strip flat ring packing. | | | | | |

The data on the geometric characteristics of ⌀50 mm Pall Ring Cascade Ring, inner arc strip flat ring packing and flexible plum blossom flat ring packing are listed in Table 2. It can be seen from the data listed that the flexible plum blossom flat ring has the lightest bulk specific weight, the largest special area and the highest voidage among the four kinds of packing with the same nominal size. Therefore, the packing of the present invention has the highest mass transfer efficiency, the largest capacity and lower cost. So the advantage of the packing of the present invention is evident.

**Table 2**

| Comparison of geometric characteristics of four kinds of packing (⌀50 mm) | | | | |
|---|---|---|---|---|
| Type of the packing | Number of the packing n (m³) | Bulk specific weight γ (kg/ m³) | Specific area a (m²/m³) | Voidage ε (%) |
| Pull Ring | 6500 | 395 | 105 | 94.9 |
| Cascade Ring | 11600 | 400 | 109 | 95.0 |
| Inner arc strip* | 22000 | 355 | 120 | 95.5 |
| Plum blossom** | 22000 | 295 | 132 | 96.2 |

| | | | | |
|---|---|---|---|---|
| * Inner arc strip flat ring packing | | | | |
| ** Flexible plum blossom flat ring packing of the present invention | | | | |

In summary, the plum blossom flat ring packing of the present invention has the evident advantages of excellent mass transfer efficiency, large capacity, low pressure drop and low cost. It can be used in normal or high pressure distillation in petrochemical industry, absorption and stripping in chemical industry (e.g., fertilizer production) and liquid-liquid extraction such as lube-oil refining, aromatic extraction. If this packing is used in technical reformation of the prior equipment to replace Raschig Ring, Pall Ring, cascade ring, Intalox Saddle, etc, the mass transfer efficiency and capacity of the equipment will be greatly increased and significant economic benefit will be obtained.

The listed examples are as follows:
1. ⌀75 mm flexible plum blossom flat ring packing, 5 petals, the height of the packing 15 mm, the height to diameter ratio 0.2, the height of the inner arc strip 9 mm, whereon the height of the tongue 4 mm.
2. ⌀50 mm flexible plum blossom flat ring packing, 5 petals, the height of the packing 12.5 mm, the height to diameter ratio 0.25, the height of the inner arc strip 7.5 mm, whereon the height of the tongue 3.5 mm.
3. ⌀38 mm flexible plum blossom flat ring packing, 5 petals, the height of the packing 11.4 mm, the height to diameter ratio 0.3, the height of the inner arc strip 6.6 mm, whereon the height of the tongue 3.0 mm.
4. ⌀50 mm flexible plum blossom flat ring packing, 6 petals, the height of the packing 12.5 mm, the height to diameter ratio 0.25, the height of the inner arc strip 7.5 mm, whereon the height of the tongue 3.5 mm.

## Claims

1. A flexible plum blossom flat ring packing, which consists of a flat ring with rectangular windows and inner arc strips connected to the two short sides of the rectangular windows, characterized in that the flat ring is in a shape of plum blossom, wherein there is a pair of adjacent but parted petals with a small gap between their folded edges; each plum petal having a rectangular window in its middle along the longitudinal direction of the circle wall; each inner arc strip connected to the two short sides of the rectangular window having a small rectangular window in its middle; to one end of the small rectangular window being regularly connected a tongue pointing to the center of the flat ring and dividing the internal region of the packing uniformly; the height to diameter ratio (H/D) of the packing being 0.2-0.3.

2. The flexible plum blossom flat ring packing according to claim 1, characterized in that the said plum blossom preferably has 4-7 petals.
